# EUROPÄISCHE PATENTSCHRIFT

(11) **EP 2 265 468 B1**
(45) Veröffentlichungstag und Bekanntmachung des Hinweises auf die Patenterteilung: **12.12.2012**
(21) Anmeldenummer: 09717107.8
(22) Anmeldetag: 26.01.2009
(51) Int. Cl.: B60R 21/01, B60Q 5/00

(54) **SICHERHEITSANORDNUNG SOWIE VERFAHREN ZUR HERSTELLUNG EINER SICHERHEITSANORDNUNG**
SAFETY ARRANGEMENT AND METHOD FOR THE PRODUCTION OF SUCH A SAFETY ARRANGEMENT
DISPOSITIF DE SÉCURITÉ ET PROCÉDÉ DE FABRICATION D'UN DISPOSITIF DE SÉCURITÉ

(30) Priorität: 07.03.2008 DE 102008013526
(43) Veröffentlichungstag der Anmeldung: 29.12.2010
(73) Patentinhaber: Autoliv Development AB, 447 83 Vårgårda (SE)
(72) Erfinder: HONDIER, Thierry, F-76116 Servaville Salmonville (FR)
(74) Vertreter: Stornebel, Kai
(86) Internationale Anmeldenummer: PCT/EP2009/000468
(87) Internationale Veröffentlichungsnummer: WO 2009/109265

(56) Entgegenhaltungen:
- WO-A-2006/076897
- WO-A-2006/086163
- DE-A1- 4 227 931
- DE-A1- 4 317 737
- US-A1- 2005 017 484

## Beschreibung

Die Erfindung betrifft eine Sicherheitsanordnung mit einem Modulträger für eine Airbageinheit und einer Airbageinheit zum Einbau in ein Lenkrad in einem Kraftfahrzeug sowie ein Verfahren zur Herstellung einer solchen Sicherheitsanordnung. Eine solche Sicherheitsanordnung ist insbesondere für einen fahrerseitigen Airbag vorgesehen, der innerhalb eines Lenkrades angeordnet ist und zum Schutz eines Fahrers im Falle eines Unfalles oder eines bevorstehenden Unfalles aktiviert wird. Ein solches Lenkrad weist in der Regel zwei Hupenkontakte auf, die im Einbauzustand elektrisch voneinander getrennt sind und im Aktivierungszustand in elektrischen Kontakt miteinander bringbar sind, um ein akustisches Hupensignal auszulösen. Diese Hupenkontakte sind in dem Modulträger befestigt und können durch Drücken auf eine Druckplatte oder Schalter elektrisch miteinander verbunden werden.

Aus der WO2006/076897 A1 welche dem Oberbegriff des Anspruchs 1 entspricht ist ein Generatorträger für ein Fahrairbagmodul zum Einbauen in ein Lenkrad eines Kraftfahrzeuges bekannt, bei dem zwei Hupenkontakte, die in elektrischen Kontakt miteinander bringbar sind, an dem Generatorträger angeordnet sind. Einer der Hupenkontakte ist dazu vorgesehen, im Einbauzustand des Generatorträgers elektrisch geerdet zu sein, wobei ein Befestigungsbereich des Generatorträgers zum Befestigen eines Gasgenerators so ausgebildet und relativ zu dem geerdeten Hupenkontakt positioniert ist, dass bei einem bestimmungsgemäßen Befestigen des Gasgenerators am Befestigungsbereich eine elektrische Kontaktierung zwischen dem geerdeten Hupenkontakt und dem Gasgenerator hergestellt wird, wobei der Generatorträger als elektrischer Isolator ausgebildet ist. Die Hupenkontakte sind dabei U-förmig ausgebildet und einmal auf einer fahrerzugewandten und einer fahrerabgewandten Seite des Generatorträgers befestigt. Durch eine Verformung der Hupenkontakte bei einer Druckausübung werden die beiden Hupenkontakte elektrisch miteinander verbunden, so dass ein Hupsignal ausgelöst wird.

Die Anordnung der beiden Hupenkontakte auf einander gegenüberliegenden Seiten des Generatorträgers, nämlich einmal die Oberseite und einmal die Unterseite, ist aufwendig.

Die DE 200 17 527 U1 betrifft ein Fahlzeuglenkrad mit einem Lenkradskelett, einer Längsachse und einem Gassackmodul, das mit zumindest einer Rastverbindung mit dem Lenkradskelett verbunden ist. Zur Betätigung der Hupe ist das Gassackmodul in Richtung der Längsachse verschiebbar gelagert. Die Rastverbindung weist zwei elektrische Kontaktflächen auf, die bei einer Verschiebung des Gassackmoduls zur Betätigung der Hupe miteinander in Kontakt treten. Dabei sind Kontaktstifte vorgesehen, die elektrisch leitend ausgebildet sind und über einen Modulträger, der ebenfalls elektrisch leitend ausgebildet ist, elektrisch miteinander verbunden sind. Der Modulträger ist über das Gasgeneratorgehäuse mit der Masse verbunden, so dass nach dem Ineingriffbringen der Kontaktflächen der Kontaktstifte mit den Kontaktflächen an den Federstiften ein Hupenkontakt geschlossen wird.

Die US 2005/0017484 A1 beschreibt einen Hupenkontakt aus einem Leitungsdraht, der als einstückiges Bauteil ausgebildet ist. Ein zweiter Hupenkontakt ist aus einer Vielzahl von Kontaktteilen ausgebildet, die Kontaktteile stellen die Mittel dafür bereit, den Hupenschaltkreis zu schließen, wenn das Airbagmodul aus einer Ruheposition in eine Aktivierungsposition bewegt wird. Die Kontaktteile sind an einer Basisplatte mittels einer Vielzahl von Schrauben befestigt, alternativ dazu können die Kontaktteile integral ausgebildet, ausgestanzt oder aus dem Material der Basisplatte oder der Stützplatte ausgebildet sein.

Die DE 43 17 737 A1 betrifft einen Hupenschalter, der eine Grundplatte und zwei Kontaktplatten aufweist. Die Grundplatte ist zwischen den Kontaktplatten angeordnet, alle drei Platten sind biegsam und leitfähig. Zwischen den Kontaktplatten und der Grundplatte sind Abstandsstücke angeordnet, die an dem Umfang rahmenartig und in der Mitte der Fläche als pillenförmige Abstandsstücke ausgebildet sind.

Die WO 2006/086163 A1 betrifft einen Hupenschalter mit einem Hupenkontakt aus mehreren Hupenkontaktabschnitten. Der Hupenschalter weist zwei relativ zueinander bewegliche Leiter, auf, die als elektrisch leitende Kabel oder Drähte ausgebildet sind. Die Drähte sind so ausgebildet, dass sie in einer Vielzahl von Punkten miteinander in Kontakt treten, wenn sie aufeinandergedrückt werden, Sobald sie in Kontakt treten, wird der elektrische Stromkreis für die Hupe geschlossen.

Aufgabe der vorliegenden Erfindung ist es, eine Sicherheitsanordnung und ein Verfahren bereitzustellen, mit denen die Montage der Sicherheitsanordnung vereinfacht und eine preiswertere Sicherheitsanordnung bereitgestellt werden können, Erfindungsgemäß wird diese Aufgabe durch eine Sicherheitsanordnung mit den Merkmalen des Anspruchs 1 sowie durch ein Verfahren mit den Merkmalen des Anspruchs 12 gelöst, Vorteilhafte Ausgestaltungen und Weiterbildungen der Erfindung werden in den Unteransprüchen beschrieben.

Die erfindungsgemäße Sicherheitsanordnung mit einem Modulträger für eine Airbageinheit und einer Airbageinheit zum Einbau in ein Lenkrad in Fahrzeugen mit zumindest zwei Hupenkontakten, die im Einbauzustand elektrisch voneinander getrennt sind und im Aktivierungszustand in elektrischen Kontakt miteinander bringbar sind, um ein akustisches Hupensignal auszulösen, sieht vor, dass zumindest einer der Hupenkontakte aus mehreren Hupenkontaktabschnitten besteht und dass die Airbageinheit elektrisch leitend mit den Hupenkontaktabschnitten verbunden ist, um den Hupenkontakt zu vervollständigen. Hupenkontakte werden über Schalter elektrisch miteinander verbunden, die an unterschiedlichen Orten an dem Modulträger angeordnet sind, in der Regel sind drei oder vier Schalter vorgesehen, die gleichmäßig verteilt angeordnet sind, so dass unabhängig von dem Ort des Einleitens einer Druckkraft auf eine Druckplatte, beispielsweise ein Frontabschluss eines Pralltopfes, eine sichere Kontaktierung der Hupenkontakte stattfinden kann. Um nicht sämtliche Schalter mit einer gesonderten Verkabelung zu versehen, sind die Hupenkontakte als Leiterbahnen ausgebildet, so dass nur eine Verkabelung jeweils an einer Stelle mit dem Hupenkontakt stattfinden muss. Treten die Schalter dann in elektrischen Kontakt sowohl mit dem ersten als auch mit dem zweiten Hupenkontakt, wird ein akustisches Hupensignal aktiviert, bis eine elektrische Trennung herbeigeführt wird. Erfindungsgemäß ist es nun vorgesehen, dass die Hupenkontakte nicht sämtliche Stellen der Schalter über elektrische Leiterbahnen miteinander verbinden, sondern, dass an dem Modulträger Hupenkontaktabschnitte vorgesehen sind, die elektrisch in Kontakt mit der Airbageinheit stehen, so dass die Hupenkontaktabschnitte zu einem Hupenkontakt vervollständig werden, der sämtliche Schalterstellen oder Schalter elektrisch miteinander verbindet. Durch den Einbau der Airbageinheit wird somit ein zunächst offener Hupenkontakt aus mehreren Hupenkontaktabschnitten, beispielsweise zwei oder drei Hupenkontaktabschnitten, geschlossen, so dass durch Aktivierung eines Schalters die beiden nunmehr vervollständigten Hupenkontakte elektrisch miteinander verbunden sind, so dass ein akustisches Hupensignal ausgelöst werden kann. Dies verringert die Kosten für die Hupenkontakte und integriert die Airbageinheit als einen elektrischen Teilleiter, so dass eine Funktionsintegration vorgenommen wird.

Eine Weiterbildung der Erfindung sieht vor, dass die Airbageinheit einen Gasgenerator und einen Gassack aufweist, die gemeinsam an dem Modulträger als Teil eines Lenkrades angeordnet werden können. Der Gassack kann dabei in einem Container oder einer Umhüllung untergebracht sein, wobei auch der Gassackcontainer oder die Umhüllung den elektrischen Kontakt zu den Hupenkontaktabschnitten herstellen kann. Alternativ oder ergänzend dazu ist vorgesehen, dass die Hupenkontaktabschnitte über den Gasgenerator miteinander verbunden sind, gegebenenfalls kann bei der entsprechenden elektrischen Isolierung zwischen Airbagcontainer und Gasgenerator auch ein Hupenkontakt durch einen Gassackcontainer vervollständigt werden, während der andere Hupenkontakt über den Gasgenerator vervollständigt wird. Es besteht also die Möglichkeit, dass beide Hupenkontakte aus mehreren Hupenkontaktabschnitten bestehen, die durch die Montage der Airbageinheit vervollständigt werden.

Eine Weiterbildung der Erfindung sieht vor, dass die Hupenkontakte auf einer gemeinsamen Seite an dem Modulträger angeordnet sind, also entweder auf der dem Fahrer zugewandten oder der dem Fahrer abgewandten Seite des Modulträgers. Dabei zeigen beide Hupenkontakte bzw. die Hupenkontaktabschnitte in dieselbe Richtung, sofern sie an einer ebenen Oberfläche des Modulträgers angeordnet sind. Die Hupenkontakte können zumindest bereichsweise nebeneinander auf dem Modulträger angeordnet sein, so dass im Wesentlichen parallele Leiterbahnen durch die Hupenkontakte oder Hupenkontaktabschnitte auf dem Modulträger gebildet werden.

Die Airbageinheit bzw. der Gasgenerator oder der Airbagcontainer kann auf dem Modulträger festgeschraubt oder angeclipst sein, um eine dauerhafte Befestigung und eine sichere elektrische Kontaktierung mit den Hupenkontaktabschnitten zu gewährleisten.

Eine Weiterbildung der Erfindung sieht vor, dass die Airbageinheit und dabei insbesondere der Gasgenerator über einen der Hupenkontakte geerdet ist, um eine elektrostatische Aufladung zu verhindern, die zu einem unbeabsichtigten Auslösen des Gasgenerators und damit zu einer unbeabsichtigten Entfaltung des Gassackes führen könnte.

Zur Erzeugung eines elektrischen Kontaktes zwischen den Hupenkontakten sind Druckschalter, bevorzugt federbelastete Druckschalter, an dem Modulträger befestigt, die sowohl mit dem einen als auch mit dem anderen Hupenkontakt elektrisch in Verbindung bringbar sind. Sobald beide Hupenkontakte mit dem Schalter elektrisch verbunden sind, wird der Hupenschaltkreis geschlossen, so dass die Hupe aktiviert wird, so dass ein akustisches Hupensignal erzeugt wird. Dabei sind die Druckschalter bevorzugt in Richtung auf den Fahrer orientiert federbelastet, so dass eine Druckkraft in Richtung auf das Lenkrad bzw. den Modulträger ausgeübt werden muss, um die Hupenkontakte elektrisch miteinander zu verbinden.

Die Hupenkontakte oder Hupenkontaktabschnitte bestehen bevorzugt aus Metallstreifen oder anderen Streifen aus einem leitfähigen Material, die in dem Modulträger eingelegt, bevorzugt eingeformt oder eingespritzt sind. Auch andere Arten der Befestigungen von Hupenkontakten oder Hupenkontaktabschnitten sind möglich, beispielsweise Einstecken und Verklemmen. Ein Verfahren zur Herstellung einer Sicherheitsanordnung mit einem Modulträger und einer daran befestigten Airbageinheit, bei dem zumindest zwei Hupenkontakte an dem Modulträger angeordnet werden, sieht vor, dass zumindest einer der beiden Hupenkontakte aus mehreren Hupenkontaktabschnitten besteht, die elektrisch voneinander getrennt an dem Modulträger befestigt und durch das Befestigen der Airbageinheit elektrisch miteinander verbunden werden. Durch das Befestigen der Airbageinheit an dem Modulträger werden zwei oder mehrere Hupenkontaktabschnitte miteinander verbunden, so dass die zumindest zwei Hupenkontakte vervollständigt werden, wobei die vervollständigten Hupenkontakte im Normalzustand, also ohne Aktivierung der Hupe, elektrisch voneinander getrennt sind.

Die Hupenkontakte können in dem Modulträger eingeklemmt oder eingespritzt werden, wobei eine besonders vorteilhafte Variante des Verfahrens darin besteht, dass die beiden Hupenkontakte zunächst einstückig ausgebildet sind, beispielsweise aus einem Blechzuschnitt ausgestanzt sind, und zwischen den Hupenkontaktabschnitten und dem Hupenkontakt Sollbruchstellen ausgebildet sind. Somit sind die beiden Hupenkontakte bzw. der Hupenkontakt und die Hupenkontaktabschnitte zunächst elektrisch miteinander verbunden, wobei diese elektrische Verbindung an den Sollbruchstellen aufgebrochen wird, indem die Sollbruchstellen aufgebrochen werden, so dass die Hupenkontaktabschnitte von dem Hupenkontakt elektrisch getrennt werden. Dies hat den Vorteil, dass nur ein Teil in ein Spritzgießwerkzeug eingelegt werden muss, wenn die Hupenkontakte bzw. Hupenkontaktabschnitte mit dem Modulträger in einem Spritzgießverfahren gefügt werden. Anschließend werden dann die elektrischen Brücken entlang der Sollbruchstellen entfernt, so dass elektrisch voneinander getrennte Hupenkontakte bzw. ein Hupenkontakt und Hupenkontaktabschnitte oder Hupenkontaktabschnitte für zwei Hupenkontakte ausgebildet werden, die erst durch die Montage des Gasgenerators oder eines Airbagcontainers bzw. der Airbageinheit zu vollständigen Hupenkontakten geschlossen werden.

Nachfolgend werden Ausführungsbeispiele der Erfindung anhand der beigefügten Figuren näher erläutert. Gleiche Bezugszeichen in unterschiedlichen Figuren bezeichnen gleiche oder ähnliche Komponenten. Es zeigen:
- Figur 1 -: eine Druntersicht auf einen Modulträger mit einem montierten Gasgenerator;
- Figur 2-: eine Draufsicht auf einen Modulträger ohne Gasgenerator;
- Figur 3 -: eine Einzeldarstellung eines Schalters; sowie
- Figur 4 -: eine Draufsicht auf eine Variante gemäß Figur 2.

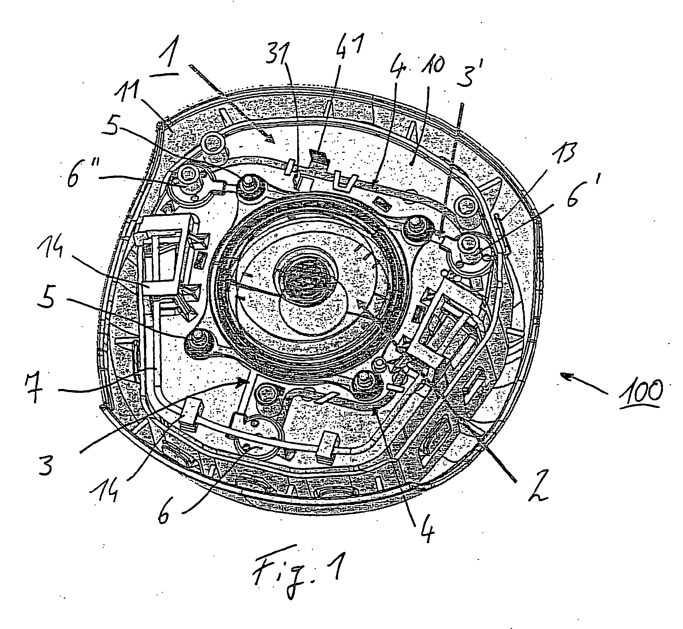

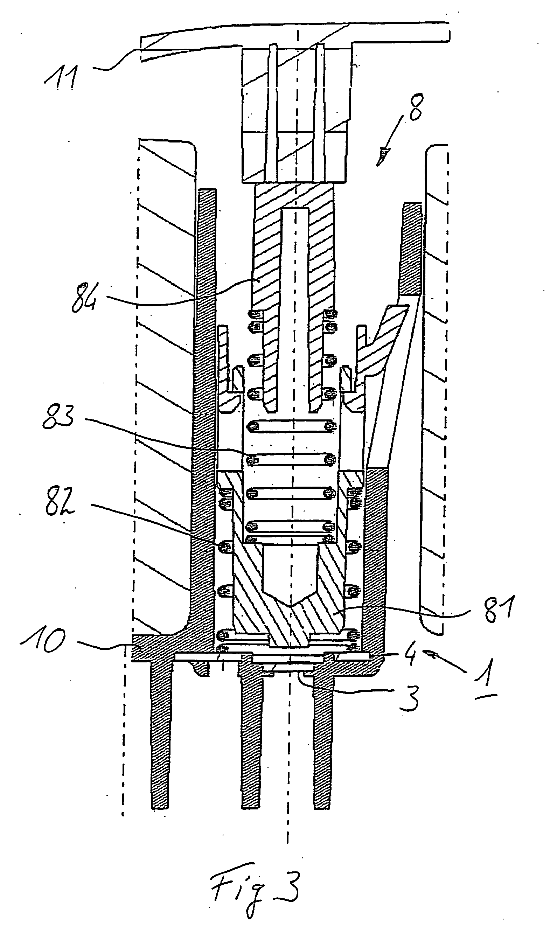

In der Figur 1 ist in einer Druntersicht ein Modulträger 1 in Gestalt einer Platte gezeigt, die eine Grundebene 10 aufweist und auf der dem Fahrer zugewandten Seite von einer Abdeckkappe 11 überwölbt wird deren Seitenwandungen nach unten zeigen und unter der ein nicht dargestellter Gassack zusammengelegt untergebracht tist. Auf der Grundebene 10 ist ein Gasgenerator 2 als Teil einer Airbageinheit über Schrauben 5 befestigt. Der Gasgenerator 2 ist teilweise durchsichtig dargestellt, so dass ebenfalls auf der Grundplatte 10 angeordnete Hupenkontakte 3, 3' und 4 sichtbar sind. Ein erster Hupenkontakt, der in unmittelbarer Nähe zu dem Gasgenerator 2 verläuft, besteht aus zwei Hupenkontaktabschnitten 3, 3', die auf der Grundebene 10 befestigt sind, beispielsweise eingesteckt, eingeklemmt, aufgeklebt oder eingespritzt. Der Modulträger 1 ist bevorzugt aus einem Kunststoffmaterial im Spritzgießverfahren hergestellt. Die Hupenkontaktabschnitte 3, 3' sind elektrisch voneinander getrennt, wobei der erste Hupenkontaktabschnitt 3 an einem ersten Kontaktbereich 6 endet, an dem ein Druckschalter angeordnet wird, der später erläutert werden wird. Von dort aus erstreckt sich der erste Hupenkontaktabschnitt 3 T-förmig in Richtung auf den Gasgenerator 2, wo er an seinen Endbereichen die Schraubenaufnahmen 5 des Gasgenerators 2 umgibt. Der zweite Hupenkontaktabschnitt 3' erstreckt sich zwischen den beiden anderen Kontaktbereichen 6', 6" auf der gegenüberliegenden Seite des ersten Kontaktbereiches 6 und ist im Wesentlichen geradlinig ausgebildet ist, wobei auch hier die Schraubbolzenbereiche 5 des Gasgenerators 2 umgeben werden. Ein zweiter Hupenkontakt 4 erstreckt sich von dem ersten Kontaktbereich 6 über den zweiten Kontaktbereich 6' zu dem dritten Kontaktbereich 6" außerhalb der ersten Hupenkontaktabschnitte 3, 3'. Der zweite Hupenkontakt 4 ist ebenfalls als eine elektrisch leitfähige Bahn ausgebildet, beispielsweise als Metallschiene oder dergleichen und ist an der Grundebene 10 auf derselben Seite wie die Hupenkontaktabschnitte 3, 3' festgelegt. An den Kontaktbereichen 6, 6', 6" sind die Hupenkontakte 3, 3'; 4 ebenfalls elektrisch voneinander getrennt und können über Schalter 8, die in der Figur 3 gezeigt sind, elektrisch miteinander gekoppelt werden.

Der erste Hupenkontaktabschnitt 3 und der zweite Hupenkontaktabschnitt 3' sind elektrisch voneinander getrennt und werden erst über den Gasgenerator 2 elektrisch miteinander verbunden, der auf der den Hupenkontaktabschnitten 3, 3' zugewandten Seite zumindest bereichsweise elektrisch leitend ausgebildet ist oder eine elektrische Leiterbahn aufweist, so dass ebenfalls eine elektrisch leitende Verbindung über den ersten Kontaktbereich 6, den ersten Hupenkontaktabschnitt 3, den Gasgenerator 2, den zweiten Kontaktbereich 6', den zweiten Hupenkontaktabschnitt 3' bis zum dritten Kontaktbereich 6" hergestellt wird. Der zweite Hupenkontakt wird somit durch die Befestigung des Gasgenerators 2 auf der Grundebene 10 vervollständigt. Die Hupenkontakte 3, 3', 4 sind dabei auf der Rückseite der Grundebene 10 des Modulträgers 1 angeordnet, wohingegen die Schalter 8 auf der gegenüberliegenden Seite angeordnet sind und von der Abdeckkappe 11 zusammen mit dem nicht dargestellten Airbag abgedeckt werden. Alternativ ist es möglich, dass von den Kontaktbereichen 6, 6', 6" elektrische Leiter zu dem Gasgenerator führen und über diesen elektrisch miteinander gekoppelt werden, so dass nur an einem der Kontaktbereiche 6, 6', 6" eine Steckeraufnahme für eine elektrische Verbindung mit der Hupe vorgesehen werden muss, damit bei der Betätigung irgendeines Schalters 8 das Hupensignal ausgelöst wird.

Der Gasgenerator 2 wird auf die Unterseite der Grundebene 10 des Modulträgers 1 aufgelegt und über die Schrauben 5 befestigt, alternative Befestigungsmittel, beispielsweise Clipsverbindungen oder Klemmverbindungen, sind möglich. Die Abdeckung 11 wird über Hakenelemente 13, die an dem Modulträger 1 ausgebildet sind, gehalten. Eine federbelastete Verschiebbarkeit der Abdeckung 11 in Richtung auf die Grundebene 10 ist gewährleistet.

Ein Federstab 7 ist in Aufnahmen 14 eingeklemmt und kann zur Festlegung an dem Lenkrad dienen.

Weiterhin ist in der Figur 1 zu erkennen, dass Steckeranschlüsse 31, 41 für eine elektrische Kontaktierung vorgesehen sind, wobei die Steckeraufnahme 41 die Verbindung mit der Hupe darstellt, während die Steckeraufnahme 31 gleichzeitig eine Erdung bewirkt. Der Anordnung der Figur 1 ist zu entnehmen, dass durch die elektrisch leitende Verbindung der Hupenkontaktabschnitte 3, 31 über die elektrisch leitende Seite des Gasgenerators 2 bzw. einen elektrisch leitenden Abschnitt des Gasgenerators 2 und die Anordnung der Erdung über den Steckeranschluss 31 gleichzeitig der Gasgenerator 2 und damit die gesamte Airbageinheit geerdet ist, so dass keine statische Aufladung und eine Gefahr von Spannungsspitzen und ungewollte Auslösung des Gasgenerators 2 besteht.

Die gesamte Sicherheitseinrichtung 100 gemäß Figur kann als ein Airbagmodul ausgebildet sein, und komplett vormontiert mit Modulträger 1, Gasgenerator 2, Gassack und Abdeckung 11 einbaufertig zur Endmontage des Lenkrades geliefert werden. Dabei kann an dem Modulträger auf der fahrerzugewandten Seite eine Aufnahme oder ein Container für den Airbag vorgesehen sein, beispielsweise in Gestalt von Seitenwänden oder Haltelaschen, über die die Abdeckung 11 angeordnet werden, um einen geschlossenen Behälter für den zusammengelegten Gassack zu bildet. Die Airbageinheit weist in der Regel einen Gasgenerator 2 und einen Gassack auf, die an dem Modulträger 1 festgelegt sind. Die Airbageinheit kann weitere Elemente aufweisen, beispielsweise Diffusoren, Deflektoren, Gasleitungen oder Aufnahmeeinrichtungen für den Gassack, um diesen in der gewünschten Form zu halten. Dabei können neben dem Gasgenerator 2 auch andere Komponenten der Airbageinheit eine elektrische Kontaktierung der Schalter 8 und der Hupenkontaktabschnitte 3, 3' untereinander bewirken.

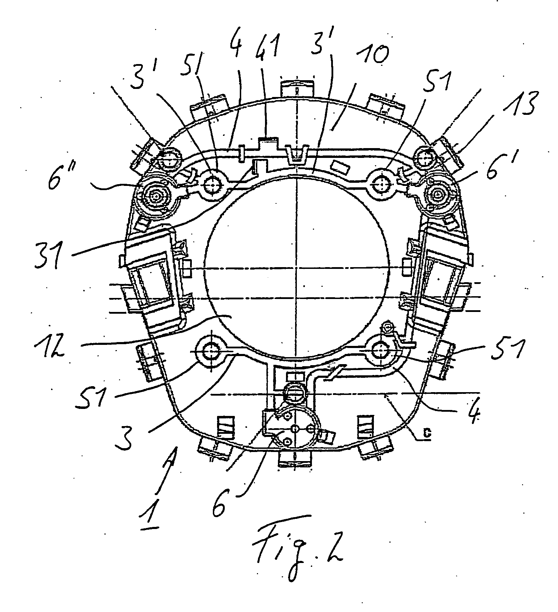

In der Figur 2 ist in Draufsicht eine Zeichnung der Grundebene 10 des Trägermoduls 1 gezeigt, aus der zu erkennen ist, dass der durchgängige Hupenkontakt 4 außerhalb der Hupenkontaktabschnitte 3, 3' angeordnet ist. Die Durchtrittslöcher für die Schraubenbolzen 5 sind durch Hupenkontaktabschnittsbereiche 51 umgeben und stellen insbesondere dort eine elektrische Verbindung zu dem nicht dargestellten und nicht montierten Gasgenerator 2 im montierten Zustand her. Innerhalb des Modulträgers 1 in der Grundebene 10 ist eine Ausnehmung 12 ausgebildet, durch die der gefaltete Airbag hindurch auf die Vorderseite des Modulträgers 1 hindurch geschoben wird, so dass sich der Airbag in Richtung auf einen Fahrer entfalten kann. Der Gasgenerator 2 ist größer als die Ausnehmung 12 und kann nicht hindurchtreten.

Seitlich von der Grundebene 10 ragen Betestigungszungen 13 zur Befestigung der nicht dargestellten Abdeckkappe 11 vor. Die Schalter 8, die in der Figur 3 dargestellt sind, werden auf der fahrerzugwandten Seite des Modulträgers 1 montiert, während beide Hupenkontakte 3, 3'; 4 auf der dem Fahrer abgewandten Seite des Modulträgers 1 angeordnet ist. Alternativ können die Hupenkontakte 3, 3', 4 auch auf der fahrerzugwandten Seite des Modulträgers 1 angeordnet sein, wenn eine entsprechende Ausgestaltung der Kontaktbereiche 6 und der Schalter 8 erfolgt.

In der Figur 3 ist in einer Schnittdarstellung ein Schalter 8 in einem montierten Zustand gezeigt. Der Schalter 8 ist an der Grundebene 10 des Modulträgers befestigt. Der Hupenkontaktabschnitt 3 und der Hupenkontakt 4 sind elektrisch voneinander getrennt. Auf der dem Fahrer zugewandten Seite des Modulträgers 1 ist der Schalter 8 angeordnet, der über zwei Federn 82, 83 von den Hupenkontakten 3, 4 weg mit einer Vorspannkraft beaufschlagt ist. An dem den Hupenkontakten 3, 4 abgewandten Ende des Schalters 8 ist eine Aufnahmekappe 84 angeordnet, an der die Abdeckung 11 befestigt ist, die ebenfalls den nicht dargestellten Airbag abdeckt. Die Aufnahmekappe 84 ist über eine zentral angeordnete Feder 83 gegenüber einem Kontaktelement 81 federbelastet. Das Kontaktelement 81 wiederum ist von einer vorgespannten Druckfeder 82 umgeben und wird von den Hupenkontakten 3, 4 weggedrückt. Wird eine Druckkraft von oben nach unten von der Abdeckung auf die Aufnahmekappe 84 ausgeübt, wird eine Kraft auf das Kontaktelement 81 ausgeübt wird, was wiederum ein Zusammendrücken der äußeren Druckfeder 82 bewirkt. Sofern die Kraft groß genug ist, befindet sich am Ende der Bewegung das Kontaktelement 81 in elektrisch leitender Verbindung sowohl mit dem äußeren Hupenkontakt 4 als auch mit dem inneren Hupenkontakt 3 bzw. Hupenkontaktabschnitt 3. Sobald dies der Fall ist, ist der Stromkreis geschlossen und die nicht dargestellte Hupe wird aktiviert. Sobald die Druckkraft entfernt wird, kehrt das Kontaktteil 81 in die dargestellte Normal- oder Ausgangsposition zurück.

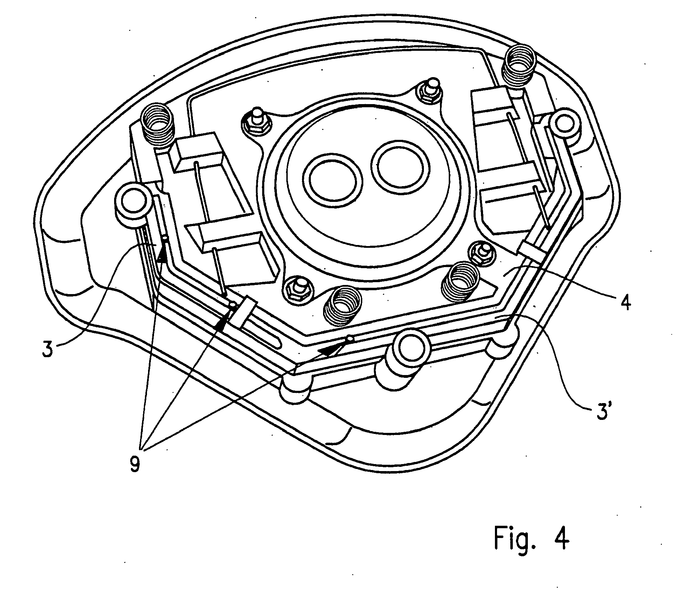

In der Figur 4 ist eine Variante der Figur 2 dargestellt, bei der die Hupenkontakte 4 und Hupenkontaktabschnitte 3, 3' zunächst einstückig ausgebildet und über Kontaktbrücken 9 mit Sollbruchstellen miteinander verbunden sind. Dies hat den Vorteil, dass die zunächst einstückig ausgebildeten Hupenkontakte 3, 3', 4 gemeinsam als ein Bauteil in eine Spritzgussform eingelegt und dann von dem Kunststoffmaterial des Modulträgers 1 aufgenommen werden können, so dass die elektrischen Leiterbahnen auf der Unterseite oder Oberseite, je nach Konstruktion, der Grundebene 10 des Modulträgers 1 angeordnet sind. Nach dem Einformen oder Einspritzen der Hupenkontakte 3, 3', 4 werden dann die Leiterbrücken 9 an den Sollbruchstellen aufgebrochen und die elektrische Verbindung unterbrochen.

## Patentansprüche

1. Sicherheitsanordnung mit einem Modulträger (1, 10) für eine Airbageinheit und einer Airbageinheit zum Einbau in ein Lenkrad in einem Fahrzeug mit zumindest zwei Hupenkontakten (3, 3'; 4), die im Einbauzustand elektrisch voneinander getrennt sind und im Aktivierungszustand der Hupenbetätigung in elektrischen Kontakt miteinander bringbar sind, um ein akustisches Hupensignal auszulösen, **dadurch gekennzeichnet, dass** zumindest einer der Hupenkontakte (3, 3') aus mehreren Hupenkontaktabschnitten (3, 3') besteht, die durch die Airbageinheit (2) elektrisch miteinander verbunden sind.

2. Sicherheitsanordnung nach Anspruch 1, **dadurch gekennzeichnet, dass** die Airbageinheit (2) einen Gasgenerator (2) und einen Gassack aufweist.

3. Sicherheitsanordnung nach Anspruch 2, **dadurch gekennzeichnet, dass** die Hupenkontaktabschnitte (3, 3') über den Gasgenerator (2) elektrisch miteinander verbunden sind.

4. Sicherheitsanordnung nach einem der voranstehenden Ansprüche, **dadurch gekennzeichnet, dass** die Hupenkontaktabschnitte (3, 3') über eine weitere Komponente der Airbageinheit, z.B. Container Diffusor oder Deflektor miteinander verbunden sind.

5. Sicherheitsanordnung nach einem der voranstehenden Ansprüche, **dadurch gekennzeichnet, dass** an der Airbageinheit (2) nur bereichsweise elektrisch leitende Materialbahnen angeordnet sind, die die Hupenkontaktabschnitte (3, 3') miteinander verbinden.

6. Sicherheitsanordnung nach einem der voranstehenden Ansprüche, **dadurch gekennzeichnet, dass** die Hupenkontakte (3, 3'; 4) auf einer gemeinsamen Seite an dem Modulträger (1, 10) angeordnet sind.

7. Sicherheitsanordnung nach einem der voranstehenden Ansprüche, **dadurch gekennzeichnet, dass** die Hupenkontakte (3, 3'; 4) zumindest bereichsweise nebeneinander auf dem Modulträger (1, 10) angeordnet sind.

8. Sicherheitsanordnung nach einem der voranstehenden Ansprüche, **dadurch gekennzeichnet, dass** die Airbageinheit (2) auf dem Modulträger (1, 10) festgeschraubt oder angeclipst ist.

9. Sicherheitsanordnung nach einem der voranstehenden Ansprüche, **dadurch gekennzeichnet, dass** die Airbageinheit (2) und insbesondere der Gasgenerator (2) über einen der Hupenkontakte (3, 3'; 4) geerdet ist.

10. Sicherheitsanordnung nach einem der voranstehenden Ansprüche, **dadurch gekennzeichnet, dass** Druckschalter (8) an dem Modulträger (1, 10) befestigt sind, die die Hupenkontakte (3, 3'; 4) zur Erzeugung eines akustischen Hupensignals miteinander elektrisch verbinden.

11. Sicherheitsanordnung nach einem der voranstehenden Ansprüche, **dadurch gekennzeichnet, dass** die Hupenkontakte (3, 3'; 4) oder Hupenkontaktabschnitte (3, 3') aus Metallstreifen bestehen, die in dem Modulträger (1, 10) eingeformt sind.

12. Verfahren zur Herstellung einer Sicherheitsanordnung mit einem Modulträger (1, 10) und einer daran befestigten Airbageinheit (2), bei dem zwei Hupenkontakte (3, 3'; 4) an dem Modulträger angeordnet werden, **dadurch gekennzeichnet, dass** zumindest einer der beiden Hupenkontakte (3, 3'; 4) aus mehreren Hupenkontaktabschnitten (3, 3) besteht, die elektrisch voneinander getrennt an dem Modulträger (1, 10) befestigt und durch das Befestigen der Airbageinheit (2) elektrisch miteinander verbunden werden.

13. Verfahren nach Anspruch 12, **dadurch gekennzeichnet, dass** die Hupenkontakte (3, 3'; 4) in den Modulträger eingeklemmt oder eingespritzt werden.

14. Verfahren nach Anspruch 12 oder 13, **dadurch gekennzeichnet, dass** die beiden Hupenkontakte (3, 3'; 4) einstückig ausgebildet sind und zwischen den Hupenkontaktabschnitten (3, 3') und dem Hupenkontakt (4) Sollbruchstellen ausgebildet sind, die nach dem Befestigen an dem Modulträger aufgebrochen werden, um die Hupenkontaktabschnitte (3, 3') von dem Hupenkontakt (4) elektrisch zu trennen.

## Claims

1. Safety arrangement having a module carrier (1, 10) for an airbag module and an airbag module for installation into a steering wheel in a vehicle, with at least two horn contacts (3, 3'; 4), which are electrically disconnected from each other in the installed state and can be brought into electrical contact with each other in the activated state of the horn operation, in order to trigger an acoustic horn signal, **characterised by** that at least one of the horn contacts (3, 3') consists of a plurality of horn contact sections (3, 3'), which are connected electrically to each other by the airbag module (2).

2. Safety arrangement according to claim 1, **characterised by** that the airbag module (2) has a gas generator (2) and a gas bag.

3. Safety arrangement according to claim 2, **characterised by** that the horn contact sections (3, 3') are connected electrically to each other via the gas generator (2).

4. Safety arrangement according to one of the preceding claims, **characterised by** that the horn contact sections (3, 3') are connected to each other via a further component of the airbag module, e.g. container diffusor or deflector.

5. Safety arrangement according to one of the preceding claims, **characterised by** that electrically conductive material webs are arranged on the airbag module (2) only in areas, which webs connect the horn contact sections (3, 3') to each other.

6. Safety arrangement according to one of the preceding claims, **characterised by** that the horn contacts (3, 3'; 4) are arranged on a common side on the module carrier (1, 10).

7. Safety arrangement according to one of the preceding claims, **characterised by** that the horn contacts (3, 3'; 4) are arranged on the module carrier (1, 10) adjacent to each other at least in areas.

8. Safety arrangement according to one of the preceding claims, **characterised by** that the airbag module (2) is screwed fixedly or clipped onto the module carrier (1, 10).

9. Safety arrangement according to one of the preceding claims, **characterised by** that the airbag module (2) and in particular the gas generator (2) is earthed via one of the horn contacts (3, 3'; 4).

10. Safety arrangement according to one of the preceding claims, **characterised by** that pressure switches (8) are attached to the module carrier (1, 10), which switches connect the horn contacts (3, 3'; 4) electrically to each other to produce an acoustic horn signal.

11. Safety arrangement according to one of the preceding claims, **characterised by** that the horn contacts (3, 3'; 4) or horn contact sections (3, 3') consist of metal strips, which are moulded into the module carrier (1, 10).

12. Method for the production of a safety arrangement with a module carrier (1, 10) and an airbag module (2) attached thereto, in which two horn contacts (3, 3'; 4) are arranged on the module carrier, **characterised by** that at least one of the two horn contacts (3, 3'; 4) consists of a plurality of horn contact sections (3, 3'), which are attached to the module carrier (1, 10) electrically disconnected from each other and are connected electrically to each other by the attachment of the airbag module (2).

13. Method according to claim 12, **characterised by** that the horn contacts (3, 3'; 4) are clamped or injected into the module carrier.

14. Method according to claim 12 or 13, **characterised by** that the two horn contacts (3, 3'; 4) are formed in one piece and predetermined breaking points are formed between the horn contact sections (3, 3') and the horn contact (4), which are broken following attachment to the module carrier, in order to disconnect the horn contact sections (3, 3') electrically from the horn contact (4).

## Revendications

1. Dispositif de sécurité avec un support de module (1, 10) pour une unité d'airbag et une unité d'airbag pour le montage dans un volant dans un véhicule avec au moins deux contacts d'avertisseur (3, 3' ; 4) qui sont séparés électriquement les uns des autres à l'état monté et peuvent être amenés en contact électrique les uns avec les autres à l'état d'activation de l'actionnement d'avertisseur pour déclencher un signal avertisseur acoustique, **caractérisé en ce qu'**au moins l'un des contacts d'avertisseur (3, 3') est composé de plusieurs parties de contact d'avertisseur (3, 3') qui sont connectées les unes aux autres électriquement par l'unité d'airbag (2).

2. Dispositif de sécurité selon la revendication 1, **caractérisé en ce que** l'unité d'airbag (2) présente un générateur de gaz (2) et un sac de gaz.

3. Dispositif de sécurité selon la revendication 2, **caractérisé en ce que** les parties de contact d'avertisseur (3, 3') sont connectées les unes aux autres électriquement par le générateur de gaz (2).

4. Dispositif de sécurité selon l'une des revendications précédentes, **caractérisé en ce que** les parties de contact d'avertisseur (3, 3') sont connectées les unes aux autres par un autre composant de l'unité d'airbag, p. ex. un conteneur, diffuseur ou déflecteur.

5. Dispositif de sécurité selon l'une des revendications précédentes, **caractérisé en ce que** sur l'unité d'airbag (2) sont disposées des bandes de matériau uniquement conductrices électriquement dans certaines zones qui connectent les parties de contact d'avertisseur (3, 3') les unes avec les autres.

6. Dispositif de sécurité selon l'une des revendications précédentes, **caractérisé en ce que** les contacts d'avertisseur (3, 3' ; 4) sont disposés sur un côté commun sur le support de module (1, 10).

7. Dispositif de sécurité selon l'une des revendications précédentes, **caractérisé en ce que** les contacts d'avertisseur (3, 3' ; 4) sont disposés au moins dans certaines zones les uns à côté des autres sur le support de module (1, 10).

8. Dispositif de sécurité selon l'une des revendications précédentes, **caractérisé en ce que** l'unité d'airbag (2) est vissée ou emboîtée sur le support de module (1, 10).

9. Dispositif de sécurité selon l'une des revendications précédentes, **caractérisé en ce que** l'unité d'airbag (2), et en particulier le générateur de gaz (2), est mise à la terre via l'un des contacts d'avertisseur (3, 3' ; 4).

10. Dispositif de sécurité selon l'une des revendications précédentes, **caractérisé en ce que** des interrupteurs à poussoir (8) sont fixés au support de module (1, 10), qui connectent les contacts d'avertisseur (3, 3' ; 4) les uns aux autres pour générer un signal avertisseur acoustique,

11. Dispositif de sécurité selon l'une des revendications précédentes, **caractérisé en ce que** les contacts d'avertisseur (3, 3' ; 4) ou les parties de contact d'avertisseur (3, 3') sont constitué(e)s de lames de métal qui sont moulées dans le support de module (1, 10).

12. Procédé de fabrication d'un dispositif de sécurité avec un support de module (1, 10) et une unité d'airbag (2) fixée à celui-ci, dans lequel deux contacts d'avertisseur (3, 3' ; 4) sont disposés sur le support de module, **caractérisé en ce qu'**au moins l'un des deux contacts d'avertisseur (3, 3' ; 4) est composé de plusieurs parties de contact d'avertisseur (3, 3) qui sont fixées au support de module (1, 10) séparées les unes des autres électriquement et connectées les unes aux autres électriquement par la fixation de l'unité d'airbag (2).

13. Procédé selon la revendication 12, **caractérisé en ce que** les contacts d'avertisseur (3, 3' ; 4) sont serrés ou injectés dans le support de module.

14. Procédé selon la revendication 12 ou 13, **caractérisé en ce que** les deux contacts d'avertisseur (3, 3' ; 4) sont formés en une seule pièce et des points destinés à la rupture sont formés entre les parties de contact d'avertisseur (3, 3') et le contact d'avertisseur (4), qui peuvent être rompus après la fixation au support de module, pour séparer électriquement les parties de contact d'avertisseur (3, 3') du contact avertisseur (4).
